(19) European Patent Office — Europäisches Patentamt — Office européen des brevets

(11) EP 0 901 705 B1

## (12) EUROPEAN PATENT SPECIFICATION

(45) Date of publication and mention
of the grant of the patent:
**24.09.2003 Bulletin 2003/39**

(51) Int Cl.[7]: **H02K 3/40**, H02K 15/08,
H01B 9/02

(21) Application number: **97924479.5**

(22) Date of filing: **27.05.1997**

(86) International application number:
**PCT/SE97/00903**

(87) International publication number:
**WO 97/045931 (04.12.1997 Gazette 1997/52)**

(54) **INSULATED CONDUCTOR FOR HIGH-VOLTAGE WINDINGS**

ISOLIERTER LEITER FÜR EINE HOCHSPANNUNGSWICKLUNG

CONDUCTEUR ISOLE POUR ENROULEMENTS A HAUTE TENSION

(84) Designated Contracting States:
**AT BE CH DE DK ES FI FR GB GR IE IT LI LU NL PT SE**
Designated Extension States:
**LT LV RO SI**

(30) Priority: **29.05.1996 SE 9602079**
**29.05.1996 SE 9602091**

(43) Date of publication of application:
**17.03.1999 Bulletin 1999/11**

(73) Proprietor: **ABB AB**
**721 83 Västeras (SE)**

(72) Inventors:
• **LEIJON, Mats**
**S-723 35 Västeras (SE)**
• **MING, Li**
**S-723 41 Västeras (SE)**

• **KYLANDER, Gunnar**
**S-723 43 Västeras (SE)**
• **CARSTENSEN, Peter**
**S-141 42 Huddinge (SE)**
• **RYDHOLM, Bengt**
**S-722 23 Västeras (SE)**
• **ANDERSSON, Per**
**S-703 54 Örebro (SE)**
• **TEMPLIN, Peter**
**S-731 40 Köping (SE)**

(74) Representative: **Hopfgarten, Nils et al**
**L.A. Groth & Co. KB**
**P.O. Box 6107**
**102 32 Stockholm (SE)**

(56) References cited:
**EP-A- 0 049 104        US-A- 3 891 880**
**US-A- 4 109 098        US-A- 4 317 001**

**Description**

TECHNICAL FIELD:

The present invention relates in a first aspect to an insulated conductor for high-voltage windings in electric machines. An insulated conductor having one or more strands, an inner semiconducting layer surrounding by the strands, an insulating layer surrounding the inner semiconducting layer and an outer semiconducting layer surrounding the insulating layer is known from US-A-5 036 165. The known conductor, however, is not for high-voltage windings in electric machines.

A second aspect of the present invention relates to a rotating electric machine or static electrical machine comprising an insulated conductor of the type described above.

The invention is applicable in rotating electric machines such as synchronous machines or asynchronous machines as well as static electrical machines as power transformers and power reactors. The invention is also applicable in other electric machines such as dual-fed machines, and applications in asynchronous static current cascades, outer pole machines and synchronous flow machines, provided their windings consist of insulated electric conductors of the type described in the introduction, and preferably at high voltages. "High voltages" here refer to electric voltages exceeding 10 kV. A typical working range for an insulated conductor for high-voltage windings according to the invention may be 1-800 kV.

BACKGROUND ART:

In order to be able to explain and describe the machine, a brief description of a rotating electric machine will first be given, exemplified on the basis of a synchronous machine. The first part of the description substantially relates to the magnetic circuit of such a machine and how it is constructed according to classical technique. Since the magnetic circuit referred to in most cases is located in the stator, the magnetic circuit below will normally be described as a stator with a laminated core, the winding of which will be referred to as a stator winding, and the slots in the laminated core for the winding will be referred to as stator slots or simply slots.

The stator winding is located in slots in the sheet iron core, the slots normally having a rectangular or trapezoidal cross section as that of a rectangle or a trapezoid. Each winding phase comprises a number of series-connected coil groups connected in series and each coil group comprises a number of series-connected coils connected in series. The different parts of the coil are designated coil side for the part which is placed in the stator and end winding end for that part which is located outside the stator. A coil comprises one or more conductors brought together in height and/or width.

Between each conductor there is a thin insulation, for example epoxy/glass fibre.

The coil is insulated from the slot with a coil insulation, that is, an insulation intended to withstand the rated voltage of the machine to earth. As insulating material, various plastic, varnish and glass fibre materials may be used. Usually, so-called mica tape is used, which is a mixture of mica and hard plastic, especially produced to provide resistance to partial discharges, which can rapidly break down the insulation. The insulation is applied to the coil by winding the mica tape around the coil in several layers. The insulation is impregnated, and then the coil side is painted with a graphite-based paint to improve the contact with the surrounding stator which is connected to earth potential.

The conductor area of the windings is determined by the current intensity in question and by the cooling method used. The conductor and the coil are usually formed with a rectangular shape to maximize the amount of conductor material in the slot. A typical coil is formed of so-called Roebel bars, in which certain of the bars may be made hollow for a coolant. A Roebel bar comprises a plurality of rectangular, parallel-connected copper conductors connected in parallel, which are transposed 360 degrees along the slot. Ringland bars with transpositions of 540 degrees and other transpositions also occur. The transposition is made to avoid the occurrence of circulating currents which are generated in a cross section of the conductor material, as viewed from the magnetic field.

For mechanical and electrical reasons, a machine cannot be made in just any size. The machine power is determined substantially by three factors:

- The conductor area of the windings. At normal operating temperature, copper, for example, has a maximum value of 3-3.5 A/mm2.
- The maximum flux density (magnetic flux) in the stator and rotor material.
- The maximum electric field strength in the insulating material, the so-called dielectric strength.

Polyphase ac windings are designed either as single-layer or two-layer windings. In the case of single-layer windings, there is only one coil side per slot, and in the case of two-layer windings there are two coil sides per slot. Two-layer windings are usually designed as diamond windings, whereas the single-layer windings which are relevant in this connection may be designed as a diamond winding or as a concentric winding. In the case of a diamond winding, only one coil span (or possibly two coil spans) occurs, whereas flat windings are designed as concentric windings, that is, with a greatly varying coil span. By coil span is meant the distance in circular measure between two coil sides belonging to the same coil, either in relation to the relevant pole pitch or in the number of intermediate slot pitches. Usually, different variants of chording are used, for example short-pitching pitch, to give the winding the desired properties.

The type of winding substantially describes how the coils in the slots. that is, the coil sides, are connected together outside the stator, that is, at the end windings ends.

Outside the stacked sheets of the stator, the coil is not provided with a painted conductive earth-potential layer. The end winding end is normally provided with an E-field control in the form of so-called corona protection varnish intended to convert a radial field into an axial field, which means that the insulation on the end windings ends occurs at a high potential relative to earth. This sometimes gives rise to corona in the end-winding-end region, which may be destructive. The so-called field-controlling points at the end windings ends entail problems for a rotating electric machine.

Normally, all large machines are designed with a two-layer winding and equally large coils. Each coil is placed with one side in one of the layers and the other side in the other layer. This means that all the coils cross each other in the end winding end. If more than two layers are used, these crossings render the winding work difficult and deteriorate the end winding end.

It is generally known that the connection of a synchronous machine/generator to a power network must be made via a delta/y connected so-called step-up transformer, since the voltage of the power network normally lies at a higher level than the voltage of the rotating electric machine. Together with the synchronous machine, this transformer thus constitutes integrated parts of a plant. The transformer constitutes an extra cost and also has the disadvantage the advantage that the total efficiency of the system is lowered. If it were possible to manufacture machines for considerably higher voltages, the step-up transformer could thus be omitted.

During the last few decades, there have been increasing requirements for rotating electric machines for higher voltages than for what has previously been possible to design. The maximum voltage level which, according to the state of the art, has been possible to achieve for synchronous machines with a good yield in the coil production is around 25-30 kV.

Certain attempts to a new approach as regards the design of synchronous machines are described, inter alia, in an article entitled "Water-and-oil-cooled Turbogenerator TVM-300" in J. Elektrotechnika, No. 1, 1970, pp. 6-8, in US 4,429,244 "Stator of Generator" and in Russian patent document CCCP Patent 955369.

The water- and oil-cooled synchronous machine described in J. Elektrotechnika is intended for voltages up to 20 kV. The article describes a new insulation system consisting of oil/paper insulation, which makes it possible to immerse the stator completely in oil. The oil can then be used as a coolant while at the same time using it as insulation. To prevent oil in the stator from leaking out towards the rotor, a dielectric oil-separating ring is provided at the internal surface of the core. The stator winding is made from conductors with an oval hollow shape provided with oil and paper insulation. The coil sides with their insulation are secured to the slots made with rectangular cross section by means of wedges. As coolant oil is used both in the hollow conductors and in holes in the stator walls. Such cooling systems, however, entail a large number of connections of both oil and electricity at the coil ends. The thick insulation also entails an increased radius of curvature of the conductors, which in turn results in an increased size of the winding overhang.

The above-mentioned US patent relates to the stator part of a synchronous machine which comprises a magnetic core of laminated sheet with trapezoidal slots for the stator winding. The slots are tapered since the need for insulation of the stator winding is less towards the interior of the rotor where that part of the winding which is located nearest the neutral point is located. In addition, the stator part comprises a dielectric oil-separating cylinder nearest the inner surface of the core. This part may increase the magnetization requirement relative to a machine without this ring. The stator winding is made of oil-immersed cables with the same diameter for each coil layer. The layers are separated from each other by means of spacers in the slots and secured by wedges. What is special for the winding is that it comprises two so-called half-windings connected in series. One of the two half-windings is located, centered, inside an insulating sleeve. The conductors of the stator winding are cooled by surrounding oil. Disadvantages with such a large quantity of oil in the system are the risk of leakage and the considerable amount of cleaning work which may result from a fault condition. Those parts of the insulating sleeve which are located outside the slots have a cylindrical part and a conical termination reinforced with current-carrying layers, the purpose of which is to control the electric field strength in the region where the cable enters the end winding.

From CCCP 955369 it is clear, in another attempt to raise the rated voltage of the synchronous machine, that the oil-cooled stator winding comprises a conventional high-voltage cable with the same dimension for all the layers. The cable is placed in stator slots formed as circular, radially located openings corresponding to the cross-section area of the cable and the necessary space for fixing and for coolant. The different radially located layers of the winding are surrounded by and fixed in insulating tubes. Insulating spacers fix the tubes in the stator slot. Because of the oil cooling, an internal dielectric ring is also needed here for sealing the oil coolant off against the internal air gap. The disadvantages of oil in the system described above also apply to this design. The design also exhibits a very narrow radial waist between the different stator slots, which implies a large slot leakage flux which significantly influences the magnetization requirement of the machine.

A report from Electric Power Research Institute, EPRI, EL-3391, from 1984 describes a review of machine concepts for achieving a higher voltage of a rotating electric machine with the purpose of being able to connect a machine to a power network without an intermediate transformer. Such a solution, judging from is judged by the investigation to provides good efficiency gains and great economic advantages. The main reason for considering it possible in 1984 to start developing generators for direct connection to power networks was that at the time a super conducting rotor had been produced. The large magnetization capacity of the super conducting field makes it possible to use an air gap winding with a sufficient insulation thickness to withstand the electrical stresses. By combining the most promising concept, according to the project, of designing a magnetic circuit with a winding, a so-called monolith cylinder armature, a concept where the winding comprises two cylinders of conductors concentrically enclosed in three cylindrical insulating casings and the whole structure beings fixed to an iron core without teeth, it was judged that a rotating electric machine for high voltage could be directly connected to a power network. The solution meant that the main insulation had to be made sufficiently thick to cope with network-to-network and network-to-earth potentials. The insulation system which, after a review of all the technique known at the time, was judged to be necessary to manage an increase to a higher voltage was that which is normally used for power transformers and which consists of dielectric-fluid-impregnated cellulose press board. Obvious disadvantages with the proposed solution are that, in addition to requiring a super conducting rotor, it requires a very thick insulation which increases the size of the machine. The end windings ends must be insulated and cooled with oil or freons to control the large electric fields in the ends. The whole machine must be hermetically enclosed to prevent the liquid dielectric from absorbing moisture from the atmosphere.

When manufacturing rotating electric machines according to the state of the art, the winding is manufactured with conductors and insulation systems in several steps, whereby the winding must be preformed prior to mounting on the magnetic circuit. Impregnation for preparing the insulation system is performed after mounting of the winding on the magnetic circuit.

SUMMARY OF THE INVENTION:

It is an object of the invention is to be able to manufacture a rotating electric machine for high voltage without any complicated preforming of the winding and without having to impregnate the insulation system after mounting of the winding.

To increase the power of a rotating electrical machine, it is known to increase the current in the ac coils. This has been achieved by optimizing the quantity of conducting material, that is, by close-packing of rectangular conductors in the rectangular rotor slots. The aim was to handle the increase in temperature resulting from this by increasing the quantity of insulating material and using more temperature-resistant and hence more expensive insulating materials. The high temperature and field load on the insulation has also caused problems with the life of the insulation. In the relatively thick-walled insulating layers which are used for high-voltage equipment, for example impregnated layers of mica tape, partial discharges, PD, constitute a serious problem. When manufacturing these insulating layers, cavities, pores, and the like, will easily arise, in which internal corona discharges arise when the insulation is subjected to high electric field strengths. These corona discharges gradually degrade the material and may lead to electric breakdown through the insulation.

The present invention is based on the realization that, to be able to increase in the power of a rotating electrical machine in a technically and economically justifiable way, this must be achieved by ensuring that the insulation is not broken down by the phenomena described above. This can be achieved according to the invention by using as insulation layers made in such a way that the risk of cavities and pores is minimal, for example extruded layers of a suitable solid insulating material, such as thermoplastic resins, cross linked thermoplastic resins, rubber such as silicone rubber, etc. In addition, it is important that the insulating layer comprises an inner layer, surrounding the conductor, with semiconducting properties and that the insulation is also provided with at least one additional outer layer, surrounding the insulation, with semiconducting properties. By semiconducting properties is meant in this context is a material which has a considerably lower conductivity than an electric conductor but which does not have such a low conductivity that it is an insulator. By using only insulating layers which may be manufactured with a minimum of defects and, in addition, providing the insulation with an inner and an outer conductive layer, it can be ensured that the thermal and electric loads are reduced. The insulating part with at least one adjoining conductive layer should have essentially the same coefficient of thermal expansion. At temperature gradients, defects caused by different temperature expansion in the insulation and the surrounding layers should not arise. The electric load on the material decreases as a consequence of the fact that the conductive layers around the insulation will constitute equipotential surfaces and that the electrical field in the insulating part will be distributed relatively evenly over the thickness of the insulation. The outer conductive layer may be connected to a chosen potential, for example earth potential. This means that, for such a cable, the outer casing of the winding in its entire length may be kept at, for example, earth potential. The outer layer may also be cut off at suitable locations along the length of the conductor and each cut-off partial length may be directly connected to a chosen potential. Around the outer conductive layer there may also be arranged other layers, casings and the like, such as a metal shield and a protective sheath.

Further knowledge gained in connection with the present invention is that increased current load leads to problems with electric (E) field concentrations at the corners at a cross section of a coil and that this entails large local loads on the insulation there. Likewise, the magnetic (B) field in the teeth of the stator will be concentrated at the corners. This means that magnetic saturation arises locally and that the magnetic core is not utilized in full and that the wave form of the generated voltage/current will be distorted. In addition, eddy-current losses caused by induced eddy currents in the conductors, which arise because of the geometry of the conductors in relation to the B field, will entail additional disadvantages in increasing current densities. A further improvement of the invention is achieved by making the coils and the slots in which the coils are placed essentially circular instead of rectangular. By making the cross section of the coils circular, these will be surrounded by a constant B field without concentrations where magnetic saturation may arise. Also the E field in the coil will be distributed evenly over the cross section and local loads on the insulation are considerably reduced. In addition, it is easier to place circular coils in slots in such a way that the number of coil sides per coil group may increase and an increase of the voltage may take place without the current in the conductors having to be increased. The reason for this beings that the cooling of the conductors is facilitated by, on the one hand, a lower current density and hence lower temperature gradients across the insulation and, on the other hand, by the circular shape of the slots which entails a more uniform temperature distribution over a cross section. Additional improvements may also be achieved by composing the conductor from smaller parts, so-called strands. The strands may be insulated from each other and only a small number of strands may be left uninsulated and in contact with the inner conductive layer, to ensure that this is at the same potential as the conductor.

The advantages of using a rotating electric machine according to the invention are that the machine can be operated at overload for a considerably longer period of time than what is usual for such machines without being damaged. This is a consequence of the composition of the machine and the limited thermal load of the insulation. It is, for example, possible to load the machine with up to 100% overload for a period exceeding 15 minutes and up to two hours.

One embodiment according to the invention is that the magnetic circuit of the rotating electric machine comprises a winding of a threaded cable with one or more extruded insulated conductors with solid insulation with a conductive layer both at the conductor and the casing. The outer conductive layer may be connected to earth potential. To be able to cope with the problems which arise in case of direct connection of rotating electric machines to all types of high-voltage power networks, a machine according to the invention has a number of features which distinguish it from the state of the art.

As described above, a winding for a rotating electric machine may be manufactured from a cable with one or more extruded insulated conductors with solid insulation with a conductive layer both at the conductor and at the casing.

Some typical examples of insulating materials are thermoplastics like LDPE (low density poly ethylene) HDPE (high density poly ethylene) PP (polypropylene) PB (poly butulene) PMP (poly methylpentene) or cross-linked materials like XLPE (cross linked poly ethylene) or rubber insulation like EPR (ethylene propylene rubber) or silicone rubber.

A further development of a conductor composed of strands is possible in that it is possible to insulate the strands with respect to each other in order thus to reduce the amount of eddy current losses in the conductor. One or a few strands may be left uninsulated to ensure that the conductive layer which surrounds the conductor is at the same potential as the conductor.

It is known that a high-voltage cable for transmission of electric energy is composed of conductors with solid extruded insulation with an inner and an outer conductive part. In the process of transmitting electric energy it was required that the insulation should be free from defects. During transmission of electric energy, the starting-point has long been that the insulation should be free from defects. When using high-voltage cables for transmission of electric energy, the aim was not to maximize the current through the cable since space is no limitation for a transmission cable. Insulation of a conductor for a rotating electric machine may be applied in some other way than by means of extrusion, for example by spraying or the like. It is important, however, that the insulation should have no defects through the whole cross section and should possess similar thermal properties. The conductive layers may be supplied with the insulation in connection with the insulation being applied to the conductors.

Preferably, cables with a circular cross section are used. Among other things, to obtain a better packing density, cables with a different cross section may be used.

To build up a voltage in the rotating electric machine, the cable is arranged in several consecutive turns in slots in the magnetic core. The winding can be designed as a multi-layer concentric cable winding to reduce the number of end-winding-end crossings. The cable may be made with tapered insulation to utilize the magnetic core in a better way, in which case the shape of the slots may be adapted to the tapered insulation of the winding.

A significant advantage of a rotating electrical machine according to the invention is that the E field is near zero in the end-winding-end region outside the outer conductive and that with the outer casing at earth potential, the electric field need not be controlled. This means that no field concentrations can be obtained, neither within sheets, in end-winding-end regions or in the transition between.

The present invention also relates to a method for manufacturing the magnetic circuit and, in particular, the winding. The method for manufacturing comprises placing the winding in the slots by threading a cable into the openings in the slots in the magnetic core. Since the cable is flexible, it can be bent and this permits a cable length to be located in several turns in a coil. The end windings ends will then consist of bending zones in the cables. The cable may also be joined in such a way that its properties remain constant over the cable length. This method entails considerable simplifications compared with the state of the art. The so-called Roebel bars are not flexible but must be preformed into the desired shape. Impregnation of the coils is also an exceedingly complicated and expensive technique when manufacturing rotating electric machines today.

This is achieved with an insulated conductor for high-voltage windings in rotating electric machines as defined in claim 1, and also with rotating electric machines comprising an insulated conductor of the type described above according to claim 7. The high-voltage cable according to the present invention comprises one or more strands surrounded by a first conductive layer. This first conductive layer is in turn surrounded by a first insulating layer, which is surrounded by a second conductive layer. This second conductive layer is earthed at at least two different points along the high-voltage cable, i.e. at the inlet and outlet of the stator. The second conductive layer has a resistivity which on the one hand minimizes the electric losses in the second conductive layer, and on the other hand contributes to the voltage induced in the second conductive layer minimizing the risk of glow discharges.

By means of the high-voltage cable according to the invention, described above, a high-voltage cable is obtained in which electric losses caused by induced voltages in the outer conductive layer can be avoided. A high-voltage cable is also obtained in which the risk of electrical discharges is minimized. Furthermore, this is obtained with a cable which is simple to manufacture.

The invention will now be explained in more detail in the following description of preferred embodiments, with reference to the accompanying drawings.

BRIEF DESCRIPTION OF THE DRAWINGS:

Figure 1 shows a cross section through a high-voltage cable according to the present invention;

Figure 2 shows a basic diagram explaining what affects the voltage between the conductive surface and earth; and

Figures 3 shows a diagram illustrating the potential on the conductive surface in relation to the distance between earthing points.

DETAILED DESCRIPTION OF EMBODIMENTS OF THE PRESENT INVENTION:

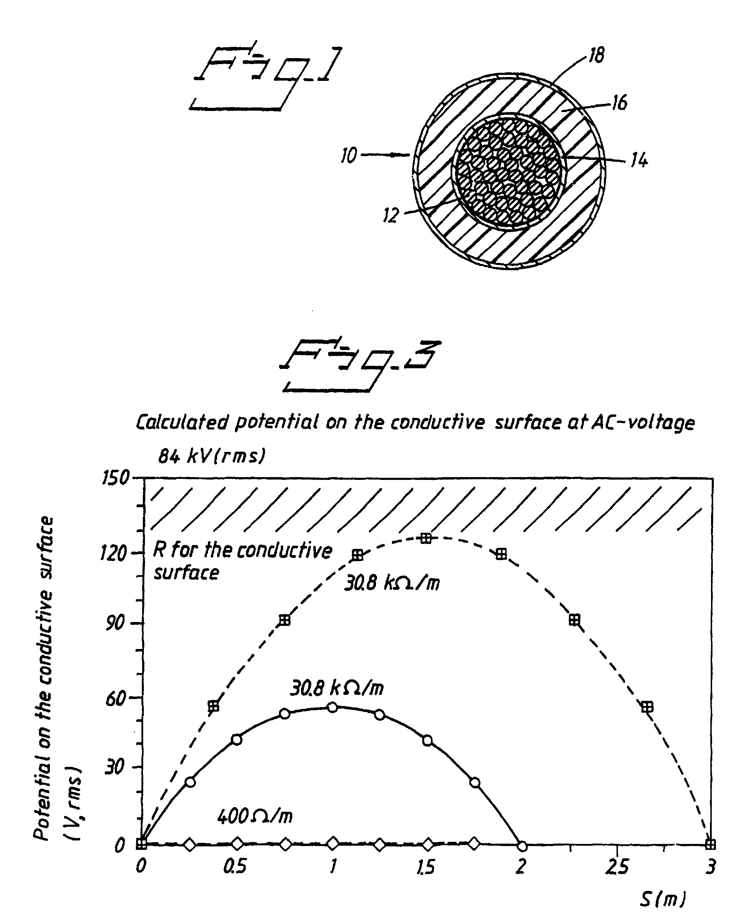

Figure 1 shows a cross-sectional view of a high-voltage cable 10 according to the present invention. The high-voltage cable 10 shown comprises an electric conductor which may consist of one or more strands 12 of copper (Cu), for instance, having circular cross section. These strands 12 are arranged in the middle of the high-voltage cable 10. Around the strands 12 is a first conductive layer 14, and around the first conductive layer 14 is a first insulating layer 16, e.g. XLPE insulation. Around the first insulating layer 16 is a second conductive layer 18.

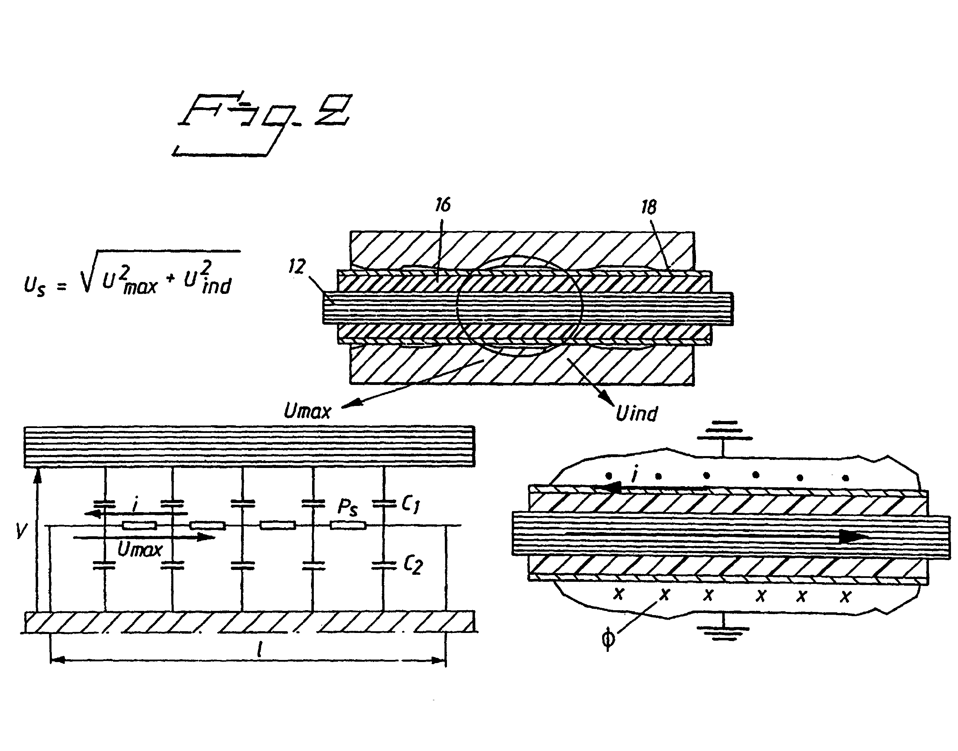

Figure 2 shows a basic diagram explaining what affects the voltage between the conductive surface and earth. The resultant voltage, Us, between the surface of the second conductive layer 18 and earth may be expressed as follows:

$$U_s = \sqrt{U^2_{max} + U^2_{ind}} \qquad (I)$$

where $U_{max}$ is the result of capacitive current in the surface and where $U_{ind}$ is voltage induced from magnetic flux. To avoid surface discharges Us must be <250 V, preferably Us <130 - 150 V.

In principle $U_{ind}$ creates no problems assuming earthing at both stator ends. Thus $U_s \approx U_{max}$. where the maximum value $U_{max}$ at the middle of the conductor is given by

$$U_{max} \approx (2\pi f C_1 U_f)^2 \frac{\rho_s l^2}{A_s}$$

where f= frequency; $C_1$ = transverse capacitance per length unit,; $U_f$ = phase-to-ground voltage; $\rho_s$ = the resistivity of the conductive layer 18; $A_s$ = the cross-sectional area of the conductive layer 18 and 1 = the length of the stator.

One way of preventing losses caused by induced voltages in the second conductive layer 18 is to increase its resistance. Since the thickness of the layer cannot be reduced for technical reasons relating to manufacture of the cable and stator, the resistance can be increased by selecting a coating or a compound that has higher resistivity.

If the resistivity is increased too much the voltage on the second conductive layer 18 mid-way between the earthed points (that is, inside the stator) will be so high that there will be risk of glow discharge and consequently erosion of the conductive and the insulation.

The resistivity $\rho_s$ of the second conductive layer 18 should therefore lie within an interval:

$$\rho_{min} < \rho_s < \rho_{max} \qquad (2)$$

where $\rho_{min}$ is determined by permissible power loss caused by eddy current losses and resistive losses caused by $U_{ind}$. $\rho_{max}$ is determined by the requirement for no glow discharge.

Experiments have shown that the resistivity $\rho_s$ of the second conductive layer 18 should be between 10-500 ohm*cm. To obtain good results with machines of all sizes $\rho_s$ should be between 50-100 ohm*cm.

Figure 3 shows a diagram illustrating potentials on the conductive surface in relation to the distance between earthing points.

An example of a suitable conductive layer 18 is one manufactured of EPDM material mixed with carbon black. The resistivity can be determined by varying the type of base polymer and/or varying the type of carbon black and/or the proportion of carbon black.

The following are a number of examples of different resistivity values obtained using various mixtures of base polymer and carbon black.

| Base polymer | Carbon black type | Carbon black quantity % | Volume resistivity ohm*cm |
|---|---|---|---|
| Ethylene vinyl acetate copolymer/nitrile rubber | EC carbon black | approx. 15 | 350 - 400 |
| "" | P-carbon black | approx. 37 | 70 - 10 |
| "" | Extra conducting carbon black, type I | approx. 35 | 40 - 50 |
| "" | Extra conducting carbon black, type II | approx. 33 | 30-60 |
| Butyl grafted polythene | "" | approx. 25 | 7-10 |
| Ethylene butyl acrylate copolymer | Acetylene carbon black | approx. 35 | 40 - 50 |
| "" | P carbon black | approx. 38 | 5 - 10 |
| Ethylene propene rubber | Extra conducting carbon black | approx. 35 | 200 - 400 |

The invention is not limited to the embodiments shown. Several variations are feasible within the scope of the appended claims.

**Claims**

1. An insulated conductor (10) for high-voltage windings in electric machines, comprising one or more strands (12), an inner, first conductive layer (14) surrounding the strands (12), a first insulating layer (16) surrounding the inner, first conductive layer 14 and an outer, second conductive layer (18) surrounding the first insulating layer (16), the resistivity of the second conductive layer (18) being between 10-500 ohm*cm.

**2.** An insulated conductor (10) as claimed in claim 1, **characterized in that** the conductive layer (18) is earthed at at least two different points along the insulated conductor (10).

**3.** An insulated conductor (10) as claimed in claim 2, **characterized in that** the resistivity of the second conductive layer (18) is lower than that of the insulation layer (16) but higher than that of the material of the strands (12).

**4.** An insulated conductor (10) as claimed in claim 3, **characterized in that** the resistivity of the second conductive layer (18) is between 50-100 ohm*cm.

**5.** An insulated conductor (10) as claimed in claim 1, **characterized in that** the resistance per axial length unit of the second conductive layer (18) is between 5-50000 ohm/m.

**6.** An insulated conductor (10) as claimed in claim 1, **characterized in that** the resistance per axial length unit of the second conductive layer (18) is between 500-25000 ohm/m.

**7.** An insulated conductor (10) as claimed in claim 1, **characterized in that** the resistance per axial length unit of the second conductive layer (18) is between 2500-5000 ohm/m.

**8.** An insulated conductor (10) as claimed in any of the preceding claims, **characterized in that** the resistivity of the second conductive layer (18) is determined by varying the type of base polymer and varying the type of carbon black and the proportion of carbon black.

**9.** An insulated conductor (10) as claimed in claim 7, **characterized in that** the base polymer is chosen from ethylene butyl acrylatecopolymers of EP-rubber.

**10.** An insulated conductor (10) as claimed in claims 7-8, **characterized in that** the second conductive layer (18) is cross-linked by peroxide.

**11.** An insulated conductor (10) as claimed in any of the preceding claims, **characterized in that** the adhesion between the insulation layer (16) and the second conductive layer (18) is of the same order of magnitude as the intrinsic strength of the insulation material.

**12.** An insulated conductor (10) as claimed in any of the preceding claims, **characterized in that** the first conductive layer (14), the insulating layer (16) and the second conductive layer (18) are extruded on the conductive strands (12).

**13.** An insulated conductor (10) as claimed in claim 11, **characterized in that** all layers are applied through extrusion through a multi layer head.

**14.** An insulated conductor (10) as claimed in any of the preceding claims, **characterized in that** the insulating layer (16) is a crosslinked polyethylene, XLPE.

**15.** An insulated conductor (10) as claimed in any of the preceding claims, **characterized in that** the insulating layer (16) is made of ethylenepropylene rubber or silicone rubber..

**16.** An insulated conductor (10) as claimed in any of the preceding claims **characterized in that** the insulating layer (16) is made of a thermoplastic material as LDPE, HDPE, PP, PB, PMP.

**17.** An electric machine comprising an insulated conductor as claimed in any of claims 1-16.

**18.** A rotating electrical machine comprising an insulated conductor as claimed in any of claims 1-16.


**Patentansprüche**

**1.** Isolierter Leiter (10) für Hochspannungswicklungen in elektrischen Maschinen, die eine oder mehrere Litzen (12), eine die Litzen (12) umgebende innere, erste leitende Schicht (14), eine die innere, erste leitende Schicht (14) umgebende erste Isolierschicht (16) sowie eine die erste Isolierschicht (16) umgebende äußere, zweite leitende Schicht (18) aufweist, wobei der spezifische elektrische Widerstand der zweiten leitenden Schicht (18) zwischen 10 und 500 Ohm$^*$cm liegt.

**2.** Isolierter Leiter (10) nach Anspruch 1, **dadurch gekennzeichnet, dass** die leitende Schicht (18) mindestens an zwei unterschiedlichen Punkten entlang des isolierten Leiters (10) geerdet ist.

**3.** Isolierter Leiter (10) nach Anspruch 2, **dadurch gekennzeichnet, dass** der spezifische elektrische Widerstand der zweiten leitenden Schicht (18) geringer ist als der der Isolierschicht (16), jedoch höher ist als der spezifische elektrische Widerstand des Werkstoffs der Litzen (12).

**4.** Isolierter Leiter (10) nach Anspruch 3, **dadurch gekennzeichnet, dass** der spezifische elektrische Widerstand der zweiten leitenden Schicht (18) zwischen 50 und 100 Ohm$^*$cm liegt.

**5.** Isolierter Leiter (10) nach Anspruch 1, **dadurch gekennzeichnet, dass** der Widerstand pro axialer Längeneinheit der zweiten leitenden Schicht (18) zwischen 5 und 50000 Ohm/m liegt.

**6.** Isolierter Leiter (10) nach Anspruch 1, **dadurch gekennzeichnet; dass** der Widerstand pro axialer Längeneinheit der zweiten leitenden Schicht (18) zwischen 500 und 25000 Ohm/m liegt.

**7.** Isolierter Leiter (10) nach Anspruch 1, **dadurch gekennzeichnet, dass** der Widerstand pro axialer Längeneinheit der zweiten leitenden Schicht (18) zwischen 2500 und 5000 Ohm/m liegt.

**8.** Isolierter Leiter (10) nach einem der vorhergehenden Ansprüche, **dadurch gekennzeichnet, dass** der spezifische elektrische Widerstand der zweiten leitenden Schicht (18) durch Verändern der Art des Ausgangspolymers und durch Verandern der Art des Rußes und dem Rußanteil bestimmt wird.

**9.** Isolierter Leiter (10) nach Anspruch 7, **dadurch gekennzeichnet, dass** das Ausgangspolymer aus Ethylenbutylacrylat-Copolymeren von EP-Gummi gewählt ist.

**10.** Isolierter Leiter (10) nach Anspruch 7 und 8, **dadurch gekennzeichnet, dass** die zweite leitende Schicht (18) mit Hilfe von Peroxid vernetzt ist.

**11.** Isolierter Leiter (10) nach einem der vorhergehenden Ansprüche, **dadurch gekennzeichnet, dass** die Haftung zwischen der Isolierschicht (16) und der zweiten leitenden Schicht (18) in der selben Größenordnung liegt wie die innere Festigkeit des Isolierwerkstoffs.

**12.** Isolierter Leiter (10) nach einem der vorhergehenden Ansprüche, **dadurch gekennzeichnet, dass** die erste leitende Schicht (14), die Isolierschicht (16) und die zweite leitende Schicht (18) auf die leitfähigen Litzen (12) extrudiert werden.

**13.** Isolierter Leiter (10) nach Anspruch 11, **dadurch gekennzeichnet, dass** alle Schichten durch Extrusion durch einen Vielschichtenkopf aufgebracht werden.

**14.** Isolierter Leiter (10) nach einem der vorhergehenden Ansprüche, **dadurch gekennzeichnet, dass** es sich bei der Isolierschicht (16) um vernetztes Polyethylen, XLPE, handelt.

**15.** Isolierter Leiter (10) nach einem der vorhergehenden Ansprüche, **dadurch gekennzeichnet, dass** die Isolierschicht (16) aus Ethylenpropylen-Gummi oder Silikongummi hergestellt ist.

**16.** Isolierter Leiter (10) nach einem der vorhergehenden Ansprüche, **dadurch gekennzeichnet, dass** die Isolierschicht (16) aus einem thermoplastischen Werkstoff, wie z.B. LDPE, HDPE, PP, PB, PMP hergestellt ist.

**17.** Elektrische Maschine, welche einen isolierten Leiter nach einem der Ansprüche 1 bis 16 aufweist.

**18.** Rotierende elektrische Maschine, welche einen iaolierten Leiter nach einem der Ansprüche 1 bis 16 aufweist.

**Revendications**

1. Conducteur isolé (10) pour des enroulements à haute tension dans une machine électrique, comprenant un ou plusieurs brins (12), une première couche conductrice intérieure (14) entourant les brins (12), une première couche isolante (16) entourant la première couche conductrice intérieure (14) et une seconde couche conductrice extérieure (18) entourant la première couche isolante (16), **caractérisé en ce que** la résistivité de la seconde couche conductrice (18) est comprise entre 10 et 500 ohm*cm.

2. Conducteur isolé (10) selon la revendication 1, **caractérise en ce que** la couche conductrice (18) est mise à la terre en au moins deux points différents le long du connecteur isolé (10).

3. Conducteur isolé (10) selon la revendication 2, **caractérisé en ce que** la résistivité de la seconde couche conductrice (18) est inférieure à celle de la couche isolante (16) mais supérieure à celle du matériau des brins (12).

4. Conducteur isolé (10) selon la revendication 3, **caractérisé en ce que** la résistivité de la seconde couche conductrice (18) est comprise entre 50 et 100 ohm*cm.

5. Conducteur isolé (10) selon la revendication 1, **caractérisé en ce que** la résistance par unité de longueur axiale de la seconde couche conductrice (18) est comprise entre 5 et 50 000 ohm/m.

6. Conducteur isolé (10) selon la revendication 1, **caractérisé en ce que** la résistance par unité de longueur axiale de la seconde couche conductrice (18) est comprise entre 500 et 25 000 ohm/m.

7. Conducteur isolé (10) selon la revendication 1, **caractérisé en ce que** la résistance par unité de longueur axiale de la seconde couche conductrice (18) est comprise entre 2500 et 5000 ohm/m.

8. Conducteur isolé (10) selon l'une ou l'ensemble des revendications précédentes, **caractérisé en ce que** la résistivité de la seconde couche conductrice (18) est déterminée en faisant varier le type de polymère de base et en faisant varier le type de noir de charbon et la proportion de noir de charbon.

9. Conducteur isolé (10) selon la revendication 7, **caractérisé en ce que** le polymère de base est choisi à partir des copolymères d'acrylate de butyle éthylène de caoutchouc EP.

10. Conducteur isolé (10) selon les revendications 7 ou 8, **caractérisé en ce que** la seconde couche conductrice (18) est reticulée au peroxyde.

11. Conducteur isolé (10). selon l'une ou l'ensemble des revendications précédentes, **caractérisé en ce que** l'adhérence entre la couche isolante (16) et la seconde couche conductrice (18) est du même ordre de grandeur que la résistance intrinsèque du matériau isolant.

12. Conducteur isolé (10) selon l'une ou l'ensemble des revendications précédentes, **caractérisé en ce que** la première couche conductrice (14), la couche isolante (16) et la seconde couche conductrice (18) sont extrudées sur les brins conducteurs (12).

13. Conducteur isolé (10) selon la revendication 11, **caractérisé en ce que** toutes les couches sont appliquées par extrusion à travers une tête multicouche.

14. Conducteur isolé (10) selon l'une ou l'ensemble des revendications précédentes, **caractérisé en ce que** la couche isolante (16) est un polyéthylène réticulé, XLPE.

15. Conducteur isolé (10) selon l'une ou l'ensemble des revendications précédentes, **caractérisé en ce que** la couche isolante (16) est faite de caoutchouc éthylène-propylène ou de caoutchouc silicone.

16. Conducteur isolé (10) selon l'une ou l'ensemble des revendications précédentes, **caractérisé en ce que** la couche isolante (16) est faite d'un matériau thermoplastique tel que du LDPE, du HDPE, du PP, du PB, du PMP.

17. Machine électrique comprenant un conducteur isolé selon l'une ou l'ensemble des revendications 1 à 16.

**18.** Machine électrique rotative comprenant un conducteur isolé selon l'une ou l'ensemble des revendications 1 à 16.

*Fig.1*

*Fig.3*

Calculated potential on the conductive surface at AC-voltage
84 kV(rms)

Fig. 2

$$U_S = \sqrt{U_{max}^2 + U_{ind}^2}$$

EP 0 901 705 B1